# FASCICULE DE BREVET EUROPEEN

(11) **EP 1 244 570 B1**
(45) Date de publication et mention de la délivrance du brevet: **23.07.2003**
(21) Numéro de dépôt: 00988930.4
(22) Date de dépôt: 15.12.2000
(51) Int. Cl.: B60Q 3/02

(54) **DISPOSITIF ELECTROLUMINESCENT POUR L'ECLAIRAGE DE L'HABITACLE D'UN VEHICULE**
ELEKTROLUMINESZENTE EINRICHTUNG ZUR INNENRAUMBELEUCHTUNG EINES FAHRZEUGS
ELECTROLUMINESCENT DEVICE FOR ILLUMINATING A VEHICLE PASSENGER COMPARTMENT

(30) Priorité: 07.01.2000 FR 0000157
(43) Date de publication de la demande: 02.10.2002
(73) Titulaire: Renault s.a.s., 92100 Boulogne Billancourt (FR)
(72) Inventeur: FRANCISCO, Paulo, F-91470 Forges Les Bains (FR); DURAND, Patrick, F-75020 Paris (FR)
(86) Numéro de dépôt international: FR0003552
(87) Numéro de publication internationale: WO01049525

(56) Documents cités:
- WO-A-98/57097
- DE-U- 29 908 994
- GB-A- 2 333 829

## Description

L'invention concerne un dispositif pour l'éclairage de l'intérieur de l'habitacle d'un véhicule automobile.

Il arrive parfois que l'éclairage à l'intérieur de l'habitacle d'un véhicule soit insuffisant. Le manque de lumière peut-être d'origine naturelle, c'est-à-dire que la lumière extérieure est trop faible pour fournir une intensité lumineuse suffisante, ou d'origine artificielle. En effet, le passager d'un véhicule automobile peut avoir envie d'isoler au moins une partie de l'habitacle de la lumière extérieure notamment, pour se protéger du soleil et/ou pour se protéger des regards extérieurs.

Dans ce but, des solutions ont été proposées. L'une d'entre elles consiste en l'utilisation d'un store ou d'un rideau réalisé dans un matériau opaque, tel que du tissu, qui est placé devant les vitres du véhicule.

Une autre solution réside dans l'obscurcissement des vitres. Il est ainsi possible d'utiliser des vitres dites teintées qui diminuent l'intensité lumineuse dans l'habitacle et qui rendent plus difficile, ou impossible, la vision de l'extérieur vers l'intérieur du véhicule. L'obscurcissement peut aussi être obtenu par la fixation sur les vitres d'un film teinté, l'effet obtenu pouvant être fixe ou variable. En effet, le film teinté peut être relié à une source d'énergie électrique qui permet d'opacifier plus ou moins le film teinté selon la valeur de l'intensité ou de la tension du courant d'alimentation.

L'obscurcissement de l'habitacle résultant du manque de lumière extérieure qui pénètre peut être tel qu'il devient gênant pour les occupants du véhicule.

Une solution consiste à utiliser une ou plusieurs lampes d'appoint appelées plafonniers qui sont généralement fixée sur le plafond du véhicule. Cependant, un tel type de lampe constitue une source de lumière ponctuelle et il ne permet pas un éclairage homogène et agréable de l'habitacle. De plus, lorsque le véhicule roule, le conducteur peut être gêné par leur éclat lumineux. DE 299 08 994 sert de base pour la présentation en deux parties de la revendication 1.

Pour résoudre ces problèmes et proposer une solution qui permet aux passagers d'un véhicule automobile de conserver une luminosité intérieure du véhicule leur permettant de voir suffisamment, par exemple pour lire, sans pour autant être désagréable ou gêner le conducteur, l'invention propose un dispositif pour l'éclairage de l'intérieur de l'habitacle d'un véhicule automobile selon la revendication 1.

Selon d'autres caractéristiques de l'invention :
- l'élément électroluminescent comprend une feuille en matériau électroluminescent ;
- l'élément électroluminescent comporte plusieurs couches de matériau électroluminescent pouvant chacune émettre une lumière de couleur différente ;
- la face de l'élément électroluminescent orientée vers l'intérieur de l'habitacle est recouverte au moins partiellement par un revêtement d'habillage comportant des trous, de façon à laisser passer vers l'intérieur de l'habitacle une partie de la lumière émise par l'élément électroluminescent ;
- l'élément électroluminescent est porté par un élément sensiblement opaque en forme générale du rideau qui est monté mobile entre une position déployée dans laquelle il masque au moins partiellement une partie sensiblement transparente de l'habitacle, notamment une vitre et une position escamotée, de manière à éclairer l'intérieur de l'habitacle lorsque le dispositif de protection est en position déployée ;
- l'élément électroluminescent est fixé sur la face de l'élément sensiblement opaque qui est orientée vers l'intérieur de l'habitacle ;
- l'élément sensiblement opaque et l'élément électroluminescent sont réalisés sous la forme d'un élément unique ;
- l'élément sensiblement opaque et l'élément électroluminescent comportent des trous, de façon à laisser passer une partie de la lumière naturelle de l'extérieur vers l'intérieur de l'habitacle ;
- en position escamotée, le dispositif de protection est logé dans le boîtier d'un dispositif d'enrouleur ;
- en position escamotée le dispositif de protection est logé à l'intérieur d'un élément de la structure ou d'un ouvrant du véhicule.

D'autres caractéristiques et avantages de l'invention apparaîtront à la lecture de la description détaillée qui suit pour la compréhension de laquelle on se reportera aux figures annexées dans lesquels :
- la figure 1 est une vue schématique en coupe longitudinale de la partie supérieure d'un véhicule automobile qui est équipé d'un exemple de réalisation d'un dispositif pour l'éclairage ne faisant pas partie de l'invention;
- la figure 2 représente schématiquement l'intérieur d'une portière d'un véhicule équipée d'un deuxième dispositif de protection contre la lumière extérieure, selon l'invention, en position déployée ;
- la figure 3 est une vue en section transversale selon la ligne 3-3 du dispositif de protection, représenté à la figure 2, en position déployée ;
- la figure 4 est une vue similaire à celle de la figure 3, le dispositif de protection étant représenté en position escamotée ;
- la figure 5 est une vue similaire à celle de la figure 1 qui représente un véhicule dont le toit est muni d'un dispositif de toit ouvrant qui est équipé d'un dispositif de protection contre la lumière extérieure réalisé conformément aux enseignements de l'invention.

Dans la suite de la description une orientation inférieure et supérieure sera utilisée, à titre non limitatif, conformément à l'orientation de bas en haut des figures.

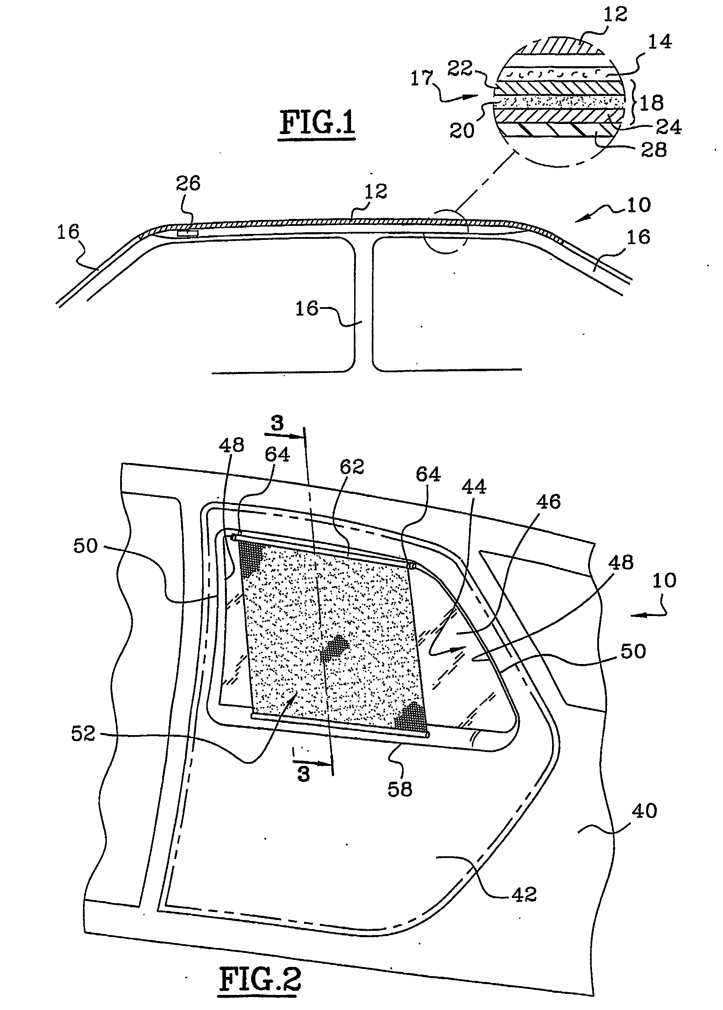

La figure 1 représente en coupe longitudinale la partie supérieure d'un véhicule automobile 10 qui comporte un toit ou pavillon 12 horizontal qui est revêtu sur sa face inférieure et intérieure d'une garniture 14 et des montants ou pieds 16 d'orientation sensiblement verticale qui définissent l'habitacle du véhicule.

Pour éclairer de façon homogène l'intérieur de l'habitacle du véhicule 10 ou au moins une partie de celui-ci, un dispositif 17 pour l'éclairage constitué notamment d'un élément électroluminescent 18 en forme de panneau d'éclairage est fixé sur la face inférieure de la garniture 14.

La fixation de l'élément électroluminescent 18 sur la garniture 14 est réalisé par exemple, par collage, par couture ou par des agrafes.

L'élément électroluminescent 18 est par exemple réalisé dans le matériau commercialisé par la société "SEIKO" sous la marque "Lumi-Sheet".

L'élément électroluminescent 18 est réalisé d'une façon similaire à un condensateur. Il comporte ainsi une couche diélectrique 20 dans laquelle sont mélangées des particules d'un matériau électroluminescent, qui est située entre une première électrode extérieure 22 et une seconde électrode intérieure 24 qui est transparente.

Un dispositif d'alimentation électrique 26 est relié électriquement aux électrodes 22 et 24.

Il est commandé par des moyens de commande non représentés. Le passage du courant à travers la couche diélectrique 20, notamment dans les particules du matériau électroluminescent, provoque l'émission de lumière qui traverse l'électrode 24 transparente et pénètre à l'intérieur de l'habitacle du véhicule 10. La lumière émise peut être blanche ou colorée selon la nature des particules de matériau électroluminescent utilisées.

Les moyens de commande permettent au dispositif d'alimentation électrique 26 de fournir un courant d'une intensité ou fréquence variable, de façon à faire varier proportionnellement l'intensité lumineuse produite et donc l'éclairement de l'habitacle.

Selon une variante, non représentée, il est possible de superposer plusieurs couches diélectriques qui sont isolées électriquement l'une de l'autre et dans lesquelles sont mélangées des particules d'un matériau électroluminescent différent de façon que chaque couche diélectrique émette une lumière d'une couleur différente. Selon la couleur de la lumière désirée par l'utilisateur, le dispositif d'alimentation électrique alimente une ou plusieurs couches diélectriques.

De façon à éviter tout risque de court-circuit ou d'électrocution, et aussi pour protéger la seconde électrode intérieure 24, sa face qui n'est pas en contact avec la couche diélectrique 20 est recouverte par une couche transparente d'un matériau isolant électrique 28.

Avantageusement, la couche d'isolation électrique 28 est colorée et elle permet ainsi de teinter la lumière émise par le matériau électroluminescent qui est situé dans la couche diélectrique 20.

L'invention permet aussi de produire un éclairage diffus et homogène dans tout l'habitacle du véhicule 10.

II est aussi possible de réaliser le dispositif 17 pour l'éclairage en plusieurs parties qui sont chacune alimentées un dispositif d'alimentation, de façon à réaliser des zones à l'intérieur de l'habitacle, par exemple, pour éclairer plus fortement les passagers situés à l'arrière du véhicule 10 que ceux situés à l'avant.

Le dispositif pour l'éclairage 17 peut aussi permettre de donner un aspect particulier à l'habitacle du véhicule, par exemple pour reproduire la lumière extérieure et obtenir une "ambiance lumineuse jour".

La couche d'isolation électrique 28 peut être recouverte par un matériau d'aspect (non représenté) qui comporte des zones opaques et des zones transparentes tel qu'un tissu à mailles larges. Ainsi, d'une part le matériau d'aspect permet de filtrer une partie de la lumière émise par l'élément électroluminescent 18 de façon à réaliser une lumière dite "d'ambiance" et, d'autre part, de camoufler le dispositif 17 pour l'éclairage et d'harmoniser son esthétique avec les revêtements recouvrant l'intérieur de l'habitacle du véhicule tel que les sièges, la garniture 14 du toit et/ou les portières.

Lorsque pour une raison quelconque, l'un des passagers du véhicule désire isoler l'habitacle de la lumière extérieure, il peut notamment masquer les surfaces transparentes du véhicule par un dispositif de protection ou store 52. L'invention permet, dans ce cas et si le passager le désire, d'éclairer l'habitacle.

La figure 2 représente une face latérale 40 de l'habitacle d'un véhicule 10 qui comporte une portière 42, ici une portière arrière, qui comprend une ouverture 44 obturée par une vitre 46 qui est montée dans des glissières verticales 48 qui sont situées dans des montants 50 de la portière 42. La vitre 46 est mobile en translation verticale, selon un plan sensiblement parallèle à celui de la portière 42, entre une position montée dans laquelle elle ferme l'ouverture 44 et une position basse dite "fenêtre ouverte" dans laquelle l'ouverture 44 est ouvert.

Selon l'invention, le dispositif de protection 52 est monté mobile entre une position déployée, représentée à la figure 2, dans laquelle il masque au moins partiellement l'ouverture 44 et une position escamotée.

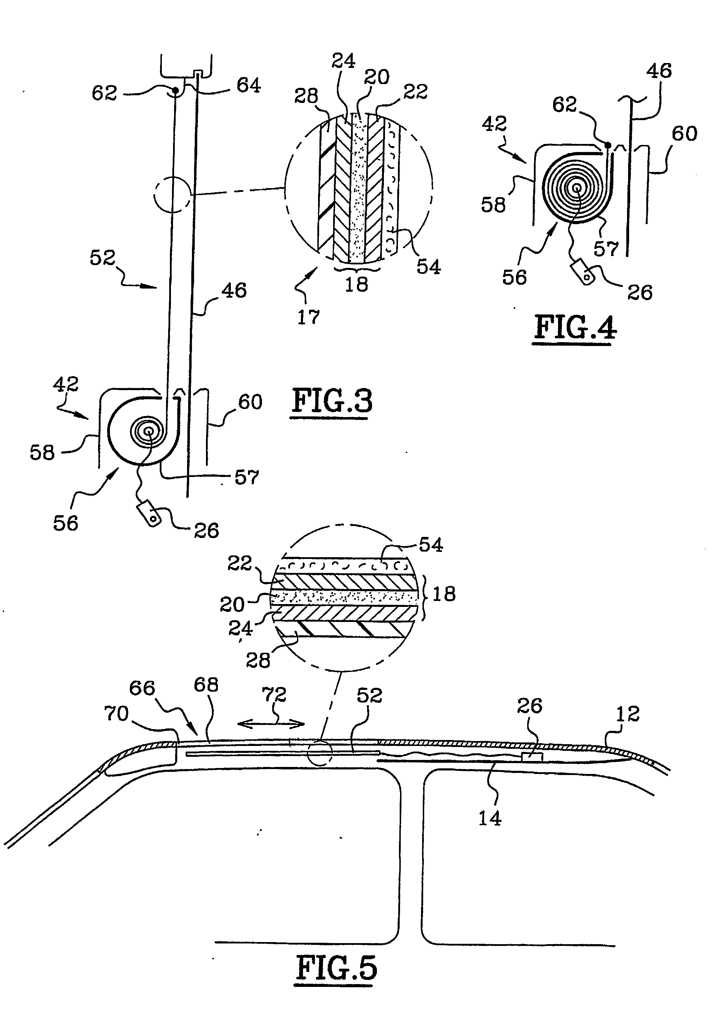

La figure 3 représente le dispositif de protection 52 en position déployée et en coupe transversale.

Le dispositif de protection 52 comporte notamment un rideau sensiblement opaque 54,par exemple un tissu, sur lequel est fixé un dispositif pour l'éclairage 17 conformément aux enseignements de l'invention. La fixation des éléments 54 et 17 est réalisée, par exemple, par collage, par couture ou par des agrafes.

L'élément sensiblement opaque 54 et l'élément électroluminescent 18 du dispositif pour l'éclairage 17 sont agencés dans l'habitacle du véhicule et sont disposés successivement de la vitre 46 vers l'intérieur du véhicule.

D'une manière connue, pour faciliter l'utilisation du dispositif 52 de protection contre la lumière extérieure, l'élément sensiblement opaque 54 et le dispositif pour l'éclairage 17 sont réalisés sous la forme de feuilles souples pour constituer un rideau souple. Ainsi, il est possible d'utiliser un dispositif d'enrouleur 56, représenté sur les figures 3 et 4, qui permet le rangement du dispositif de protection 52 lorsqu'il est en position escamotée, conformément à la figure 4, à l'intérieur d'un boîtier 57.

Avantageusement, l'enrouleur 56 est situé entre l'habillage intérieur 58 de la portière 42 et la carrosserie 60 du véhicule.

Ainsi, en position escamotée, le dispositif de protection 52 est caché dans une portière 42. Lorsqu'il est utilisé son extrémité supérieure 62 coopère avec des moyens d'accrochage 64 qui sont ici situés sur l'élément horizontal supérieur qui délimite l'ouverture 44 de la portière 42.

L'utilisation du dispositif de protection 52 contre la lumière extérieure est la suivante.

Lorsque le passager ou le conducteur du véhicule désire s'isoler des regards extérieurs et/ou isoler l'habitacle du véhicule de lumière extérieure, il tire l'extrémité supérieure 62 du dispositif de protection 52 vers le haut de façon à le faire passer de sa position escamotée conformément à la figure 4 à sa position déployée représentée à la figure 3. Il se trouve ainsi protégé des regards et de la lumière venant de l'extérieur du véhicule. Lorsque la luminosité à l'intérieur du véhicule est jugée insuffisante, le passager ou le conducteur peut actionner les moyens de commande de façon à faire passer un courant dans la couche diélectrique 20 et à éclairer l'intérieur de l'habitacle.

Avantageusement, les moyens de commande sont situés au niveau des moyens d'accrochage 64 de l'extrémité supérieure 62. Ainsi, dés que le dispositif de protection 52 est en position déployée le dispositif d'alimentation électrique 26, peut fournir un courant qui provoque l'éclairage de l'habitacle du véhicule.

Selon une variante, les moyens de commande peuvent être constitués de deux capteurs (non représentés). Le premier est par exemple, un capteur dit "fin de course" qui détecte la position fermée du dispositif de protection 52. Le second qui peut être une cellule photo électrique, provoque l'alimentation électrique de l'élément électroluminescent 18 lorsque l'intensité lumineuse est inférieure à une valeur prédéterminée et que la position fermée du dispositif de protection 52 est détectée par le premier capteur.

De façon avantageuse, l'élément sensiblement opaque 54 et le dispositif 17 pour l'éclairage sont réalisés sous la forme d'un élément unique multicouches qui comporte une face opaque orientée vers la vitre 46 et l'extérieur du véhicule et une face transparente laissant passer la lumière produite par les particules de matériau électroluminescent comprises dans la couche diélectrique 20.

Selon une variante, il peut être intéressant de réaliser des trous dans l'élément sensiblement opaque 54 ainsi que dans le dispositif pour l'éclairage 17. Ainsi, le dispositif de protection 52 a en quelque sorte une fonction de filtre qui empêche les regards extérieurs de voir ce qui ce passe à l'intérieur de l'habitacle et qui diminue fortement la pénétration de la lumière extérieure dans l'habitacle du véhicule. L'intensité lumineuse que doit produire l'élément électroluminescent 18 pour que la luminosité à l'intérieur de l'habitacle soit suffisante pour que le passager ou le conducteur du véhicule voit suffisamment est alors dans certains cas fortement diminuée, ce qui réduit la consommation en énergie électrique du dispositif de protection et d'éclairage.

Un tel dispositif de protection 52 peut être utilisé, par exemple dans des véhicules de tourisme, mais aussi dans des cabines de véhicule de transport tels que des camions.

Ainsi, lorsque le chauffeur désire se reposer en isolant complètement la cabine de l'extérieur, le dispositif de protection 52 permet de créer un espace qui est isolé de la lumière et des regards extérieurs et qui peut être éclairé par une lumière agréable propice au repos du chauffeur, voir plus importante si nécessaire.

Selon une autre variante de l'invention, le dispositif de protection 52 contre la lumière et les regards extérieurs est disposé devant une ouverture 66 réalisée dans le toit 12 du véhicule, conformément à la figure 5.

Le toit 12 du véhicule automobile comporte alors une partie mobile 68 de fermeture aussi appelée "toit ouvrant" qui est réalisée dans un matériau qui laisse passer la lumière extérieure, notamment en verre. La partie mobile 68 est montée articulée autour d'un axe 70 d'orientation transversale qui est situé à l'extrémité avant de la partie mobile 68, entre une position ouverte et une position fermée.

Le dispositif de protection 52 est disposé dans l'habitacle du véhicule sous la partie mobile 68 et il est aussi monté en translation selon la flèche 72 dans un plan sensiblement horizontal.

Le dispositif d'alimentation électrique 26 est de préférence placé entre le toit 12 et la garniture 14.

Avantageusement, l'élément sensiblement opaque 54 est rigide ce qui facilite la translation du dispositif de protection 52.

En position escamotée, le dispositif de protection 52 est situé à l'intérieur de la structure du véhicule 10 dans l'épaisseur entre le toit 12 et la garniture 14.

En général, notamment la nuit, l'éclairage de l'habitacle du véhicule par un plafonnier gêne le conducteur. Un dispositif de séparation mobile, non représenté, peut permettre de créer des zones intérieures de l'habitacle ayant des éclairages différents. Pour ce faire le dispositif de séparation est disposé, par exemple verticalement entre les passagers avant et arrière du véhicule.

Le dispositif de séparation peut être réalisé de façon similaire au dispositif de protection 52. L'élément sensiblement opaque 54 est alors orienté vers l'avant, tandis que le dispositif 17 pour l'éclairage permet d'éclairer l'arrière du véhicule. Ainsi, la partie arrière de l'habitacle du véhicule peut être éclairée, ce qui permet par exemple aux passagers situés à l'arrière de lire sans que la lumière ne pénètre dans la partie avant et ne gêne le conducteur.

## Revendications

1. Dispositif (17) pour l'éclairage de l'intérieur de l'habitacle d'un véhicule automobile (10) qui comporte une source lumineuse du type qui est fixée à un élément (12) de la structure du véhicule (10), et qui consiste en un élément électroluminescent (18) en forme générale de panneau orienté de façon à éclairer l'intérieur de l'habitacle, **caractérisé en ce que** l'élément électroluminescent (18) est porté par un élément sensiblement opaque (54) en forme générale de rideau qui est monté mobile entre une position déployée dans laquelle il masque au moins partiellement une partie sensiblement transparente (44) de l'habitacle, notamment une vitre et une position escamotée, de manière à éclairer l'intérieur de l'habitacle lorsque le dispositif de protection (52) est en position déployée.

2. Dispositif (17) pour l'éclairage selon la revendication précédente, **caractérisé en ce que** l'élément électroluminescent (18) est fixé sur la face de l'élément sensiblement opaque (54) qui est orientée vers l'intérieur de l'habitacle.

3. Dispositif (17) pour l'éclairage selon l'une quelconque des revendications précédentes, **caractérisé en ce que** l'élément sensiblement opaque (54) et l'élément électroluminescent (18) sont réalisés sous la forme d'un élément unique.

4. Dispositif (17) pour l'éclairage selon l'une quelconque des revendications précédentes, **caractérisé en ce que** l'élément sensiblement opaque (54) et l'élément électroluminescent (18) comportent des trous, de façon à laisser passer une partie de la lumière naturelle de l'extérieur vers l'intérieur de l'habitacle.

5. Dispositif (17) pour l'éclairage selon l'une quelconque des revendications précédentes, **caractérisé en ce qu'**en position escamotée, le dispositif de protection (52) est logé dans le boîtier (57) d'un dispositif d'enrouleur (56).

6. Dispositif (17) pour l'éclairage selon l'une quelconque des revendications précédentes, **caractérisé en ce qu'**en position escamotée le dispositif de protection (52) est logé à l'intérieur d'un élément de la structure ou d'un ouvrant du véhicule.

7. Dispositif (17) pour l'éclairage selon l'une quelconque des revendications précédentes, **caractérisé en ce que** l'élément électroluminescent (18) comprend une feuille en matériau électroluminescent (20).

8. Dispositif (17) pour l'éclairage selon la revendication précédente, **caractérisé en ce que** l'élément électroluminescent (18) comporte plusieurs couches de matériau électroluminescent (20) pouvant chacune émettre une lumière de couleur différente.

9. Dispositif (17) pour l'éclairage selon l'une quelconque des revendications précédentes, **caractérisé en ce que** la face de l'élément électroluminescent (18) orientée vers l'intérieur de l'habitacle est recouverte au moins partiellement par un, revêtement d'habillage comportant des trous, de façon à laisser passer vers l'intérieur de l'habitacle une partie de la lumière émise par élément électroluminescent (18).

## Patentansprüche

1. Vorrichtung (17) zur Beleuchtung des Inneren des Fahrgastraums eines Fahrzeuges (10), mit einer Lichtquelle, die an einem Bauteil (12) des Aufbaus des Fahrzeuges (10) befestigt ist und die aus einem Elektrolumineszenz-Bauteil (18) in der allgemeinen Form einer Platte besteht, das derart ausgerichtet ist, dass es das Innere des Fahrgastraums beleuchtet, **dadurch gekennzeichnet, dass** das Elektrolumineszenz-Bauteil (18) von einem im wesentlichen undurchsichtigen Teil (54) in der allgemeinen Form eines Vorhangs getragen wird, das beweglich zwischen einer entfalteten Stellung, in der es zumindest teilweise einen im wesentlichen transparenten Bereich (44) des Fahrgastraums abdeckt, insbesondere eine Scheibe, und einer eingezogenen Stellung angeordnet ist, sodass es das Innere des Fahrgastraums beleuchten kann, wenn die Schutzvorrichtung (52) in der entfalteten Stellung ist.

2. Vorrichtung (17) zur Beleuchtung nach dem vorhergehenden Anspruch, **dadurch gekennzeichnet, dass** das Elektrolumineszenz-Bauteil (18) an derjenigen Seite des im wesentlichen undurchsichtigen Teils (54) befestigt ist, die zum Inneren des Fahrgastraums ausgerichtet ist.

3. Vorrichtung (17) zur Beleuchtung nach einem der vorhergehenden Ansprüche, **dadurch gekennzeichnet, dass** das im wesentlichen undurchsichtige Teil (54) und das Elektrolumineszenz-Bauteil (18) als einstückiges Teil ausgebildet sind.

4. Vorrichtung (17) zur Beleuchtung nach einem der vorhergehenden Ansprüche, **dadurch gekennzeichnet, dass** das im wesentlichen undurchsichtige Teil (54) und das Elektrolumineszenz-Bauteil (18) Öffnungen aufweisen, sodass nur ein Teil des natürlichen Tageslichts von außen in das Innere des Fahrgastraums einfallen kann.

5. Vorrichtung zur Beleuchtung nach einem der vorhergehenden Ansprüche, **dadurch gekennzeichnet, dass** in der eingezogenen Stellung die Schutzvorrichtung (52) in einem Gehäuse (57) einer Aufrollanordnung (56) angeordnet ist.

6. Vorrichtung (17) zur Beleuchtung nach einem der vorhergehenden Ansprüche, **dadurch gekennzeichnet, dass** in der eingezogenen Stellung die Schutzvorrichtung (52) im Inneren eines Bauteils des Aufbaus oder eines sich öffnenden Teils des Fahrzeuges angeordnet ist.

7. Vorrichtung (17) zur Beleuchtung nach einem der vorhergehenden Ansprüche, **dadurch gekennzeichnet, dass** das Elektrolumineszenz-Bauteil (18) eine Folie aus einem Elektrolumineszenz-Material (20) aufweist.

8. Vorrichtung (17) zur Beleuchtung nach dem vorhergehenden Anspruch, **dadurch gekennzeichnet, dass** das Elektrolumineszenz-Bauteil (18) mehrere Schichten aus dem Elektrolumineszenz-Material (20) aufweist, deren jede Licht einer unterschiedlichen Farbe aussenden kann.

9. Vorrichtung (17) zur Beleuchtung nach einem der vorhergehenden Ansprüche, **dadurch gekennzeichnet, dass** diejenige Seite des Elektrolumineszenz-Bauteils (18), die zum Inneren des Fahrgastraums hin gerichtet ist, zumindest teilweise mit einer Verkleidungsschicht bedeckt ist, welche Öffnungen aufweist, sodass nur ein Teil des vom. Elektrolumineszenz-Bauteil (18) ausgesandten Lichts in das Innere des Fahrgastraums fällt.

## Claims

1. A device (17) for lighting the interior of the passenger space of an automobile vehicle (10) which comprises a light source of the type which is fixed to a member (12) of the bodywork of the vehicle (10) and which comprises an electroluminescent member (18) in the general form of a panel oriented so as to light the interior of the passenger space, **characterised in that** the electroluminescent member (18) is borne by a substantially opaque member (54) in the general form of a curtain which is mounted to move between a deployed position in which it at least partially masks a substantially transparent part (44) of the passenger space, in particular a window, and a retracted position, so as to light the interior of the passenger space when the protection device (52) is in a deployed position.

2. A lighting device (17) as claimed in the preceding claim, **characterised in that** the electroluminescent member (18) is secured on the surface of the substantially opaque member (54) which is oriented towards the interior of the passenger space.

3. A lighting device (17) as claimed in any one of the preceding claims, **characterised in that** the substantially opaque member (54) and the electroluminescent member (18) are produced as a single member.

4. A lighting device (17) as claimed in any one of the preceding claims, **characterised in that** the substantially opaque member (54) and the electroluminescent member (18) comprise holes so as to enable some natural light from outside to enter the interior of the passenger space.

5. A lighting device (17) as claimed in any one of the preceding claims, **characterised in that**, in the retracted position, the protection device (52) is housed in the housing (57) of a winder device (56).

6. A lighting device (17) as claimed in any one of the preceding claims, **characterised in that**, in the retracted position, the protection device (52) is housed within a member of the bodywork or an opening of the vehicle.

7. A lighting device (17) as claimed in any one of the preceding claims, **characterised in that** the electroluminescent member (18) comprises a sheet of electroluminescent material (20).

8. A lighting device (17) as claimed in the preceding claim, **characterised in that** the electroluminescent member (18) comprises a plurality of layers of electroluminescent material (20) each able to emit light of a different colour.

9. A lighting device (17) as claimed in any one of the preceding claims, **characterised in that** the surface of the electroluminescent member (18) oriented towards the interior of the passenger space is at least partially covered by a covering comprising holes, so as to enable some of the light emitted by the electroluminescent member (18) to pass into the interior of the passenger space.
